# EUROPÄISCHE PATENTSCHRIFT

(11) **EP 4 588 336 B1**
(45) Veröffentlichungstag und Bekanntmachung des Hinweises auf die Patenterteilung: **28.10.2026**
(21) Anmeldenummer: 24217405.0
(22) Anmeldetag: 04.12.2024
(51) Int. Cl.: A01F 15/08

(54) **BINDEEINRICHTUNG FÜR EINE QUADERBALLENPRESSE**
BINDING DEVICE FOR A RECTANGULAR BALER
DISPOSITIF DE LIAGE POUR PRESSE À BALLES CARRÉES

(30) Priorität: 17.01.2024 DE 102024101262
(43) Veröffentlichungstag der Anmeldung: 23.07.2025
(73) Patentinhaber: Usines CLAAS France S.A.S, 57140 St. Rémy / Woippy (FR)
(72) Erfinder: Rongvaux, Laurent, 54800 Tronville (FR); Altmayer, Marc, 57320 Alzing (FR); Albrecht, Jean Constant, 54210 Saint-Nicolas-de-Port (FR); Arnould, Cyrille, 57645 Montoy-Flanville (FR)
(74) Vertreter: Budach, Steffen

(56) Entgegenhaltungen:
- EP-A1- 4 248 731
- EP-B1- 3 298 884
- DE-C2- 4 309 275

## Beschreibung

Die vorliegende Erfindung betrifft eine Bindeeinrichtung für eine Quaderballenpresse gemäß dem Oberbegriff des Anspruches 1 sowie eine Quaderballenpresse gemäß dem Oberbegriff des Anspruches 15.

Die Bindeeinrichtung einer Quaderballenpresse dient zum Knoten eines bandförmigen Bindemittels in einer Bindephase. Die Bindeeinrichtung umfasst zumindest eine von einer Knoterwelle angetriebene Knotervorrichtung, eine um eine zur Knoterwelle parallel verlaufende Schwenkachse schwenkbare Nadelschwinge sowie eine Antriebseinheit. An der Nadelschwinge sind Bindenadeln angeordnet, die oszillierend durch eine Schwenkbewegung der Nadelschwinge um die Schwenkachse auf und ab bewegt werden. Die Antriebseinheit weist ein von einer Antriebswelle angetriebenes schaltbares Getriebe auf, welches dazu ausgeführt und eingerichtet ist, die zumindest eine Knotervorrichtung und die Nadelschwinge beim Auslösen der Bindephase durch eine Auslösevorrichtung anzutreiben. Zum Schwenken der Nadelschwinge ist ein Kurbelarm drehfest an der Knoterwelle angeordnet, wobei an dem Kurbelarm eine Antriebsstange mit einem Ende angelenkt ist, welche mit ihrem anderen Ende an der Nadelschwinge angelenkt ist.

Die EP 3 298 884 B1 beschreibt eine Bindeeinrichtung für eine Quaderballenpresse zum Binden von gepressten Ballen, wobei die Bindeeinrichtung eine Knotereinrichtung und an einer Nadelschwinge angeordnete Bindenadeln umfasst. Für den Antrieb der Knotereinrichtung und der Nadelschwinge, an der die Bindenadeln angeordnet sind, wird eine gemeinsame Antriebswelle verwendet. Während eines Ballenpressvorgangs dreht sich die Antriebswelle kontinuierlich mit einer konstanten Drehzahl. Zwischen der Antriebswelle und der Nadelschwinge ist eine Stangenanordnung vorgesehen, die dazu eingerichtet ist, die Nadelschwinge aus einer Ruheposition in eine Garnabgabeposition und zurückzubewegen, wenn ein Bindevorgang ausgelöst wird. Die Stangenanordnung besteht dabei aus einer Vielzahl von miteinander gekoppelten Stäben und Halteelementen, um die Nadelschwinge in verschiedenen Lagen zu halten, die Bewegungen zu steuern und sicherzustellen, dass die Bindenadeln stets aus der Presskammer gezogen werden. Um zu verhindern, dass die Bindenadeln brechen, wenn sich in der Presskammer ein Hindernis befindet, ist es aus der EP 3 298 884 B1 bekannt, einen Scherbolzen in eine an einem Kurbelarm angelenkte Antriebsstange zu integrieren, welche die Antriebswelle und die Nadelschwinge trieblich miteinander koppelt.

Ausgehend vom vorstehend genannten Stand der Technik liegt der Erfindung die Aufgabe zugrunde, eine Bindeeinrichtung sowie eine Quaderballenpresse der eingangs genannten Art weiterzubilden, welche in allen Betriebssituationen einen zuverlässigen Bindevorgang gewährleistet und gleichzeitig sicherstellt, dass die Bindenadeln stets aus der Presskammer bewegt werden. Dies soll auch dann der Fall sein, wenn der Bindevorgang unregelmäßig ablaufen sollte. Insbesondere soll sich die Bindeeinrichtung durch einen weniger komplexen mechanischen Aufbau auszeichnen.

Diese Aufgabe wird erfindungsgemäß durch eine Bindeeinrichtung mit den Merkmalen des Anspruches 1 sowie eine Quaderballenpresse mit den Merkmalen des Anspruches 15 gelöst. Vorteilhafte Weiterbildungen sind Gegenstand der abhängigen Ansprüche.

Gemäß dem Anspruch 1 wird eine Bindeeinrichtung für eine Quaderballenpresse zum Knoten eines bandförmigen Bindemittels, welches zum Binden eines gepressten Ballens in einer Bindephase vorgesehen ist, vorgeschlagen, wobei die Bindeeinrichtung zumindest eine von einer Knoterwelle angetriebene Knotervorrichtung, eine um eine zur Knoterwelle parallel verlaufende Schwenkachse schwenkbare Nadelschwinge, an der Bindenadeln angeordnet sind, sowie eine Antriebseinheit umfasst, wobei die Antriebseinheit ein von einer Antriebswelle angetriebenes schaltbares Getriebe aufweist, welches dazu ausgeführt und eingerichtet ist, die zumindest eine Knotervorrichtung und die Nadelschwinge beim Auslösen einer Bindephase durch eine Auslösevorrichtung anzutreiben, wobei zum Schwenken der Nadelschwinge aus einer Ruheposition in eine Garnabgabeposition der Bindenadeln ein Kurbelarm drehfest an der Knoterwelle angeordnet ist, an welchem eine Antriebsstange mit einem Ende angelenkt ist, welche mit ihrem anderen Ende an der Nadelschwinge angelenkt ist. Erfindungsgemäß ist vorgesehen, dass die Nadelschwinge durch einen zusätzlichen teleskopierbaren Aktuator mit einer Abtriebswelle des Getriebes gekoppelt ist, um die Nadelschwinge während der Bindephase anzutreiben.

Die erfindungsgemäße Ausgestaltung führt dazu, dass sichergestellt wird, dass sich die Bindenadeln während einer Ballenbildungsphase bei jedem Presskolbenhub außerhalb der Presskammer befinden. Ebenso wird sichergestellt, dass in jedem Betriebszustand, d.h. sowohl während eines regelmäßig oder unregelmäßig ablaufenden Bindevorganges, die Bindenadeln aus der Presskammer bewegt werden. Weiterhin sorgt der zusätzliche teleskopierbare Aktuator dafür, dass die Geschwindigkeit der Bindenadeln bei ihrer Bewegung am Ende der Bindephase aus der Presskammer heraus erhöht wird. Des Weiteren findet eine im Wesentlichen gleichmäßige Bewegung der Bindenadeln über den gesamten Bindevorgang statt.

Der teleskopierbare Aktuator trägt während der durch die Auslösevorrichtung aktivierten Bindephase unterstützend zur Bewegung der Nadelschwinge bei. Der teleskopierbare Aktuator unterstützt die mittels der Knoterwelle angetriebene Antriebsstange, um die im Wesentlichen gleichmäßige Bewegung der Bindenadeln über den gesamten Bindevorgang zu erreichen.

Insbesondere kann an der Abtriebswelle ein Kurbelarm drehfest angeordnet sein, an welchem der teleskopierbare Aktuator mit einem Ende angelenkt ist, welcher mit seinem anderen Ende an der Nadelschwinge angelenkt ist.

Der teleskopierbare Aktuator ist bevorzugt als passives Bauteil ausgeführt, d.h. eine Längenänderung wird nur durch die rotatorische Bewegung der Abtriebswelle, die vom Kurbelarm auf den teleskopierbaren Aktuator übertragen wird, bewirkt. Der teleskopierbare Aktuator ist insbesondere als teleskopierbare Antriebsstange ausgeführt.

Weiter bevorzugt weist der teleskopierbare Aktuator eine Auszuglänge auf, die derart bemessen ist, dass der Kurbelarm während einer Ballenbildungsphase vollständige Umdrehungen mit der Abtriebswelle ausführen kann, wobei die Nadelschwinge in ihrer Ruheposition verbleibt.

Insbesondere kann das schaltbare Getriebe eine Kegelradstufe und eine durch die Kegelradstufe mittels der Abtriebswelle antreibbare Stirnradstufe aufweisen. Dabei bilden die Kegelradstufe und die Stirnradstufe Komponenten des Getriebes, die in einem gemeinsamen Getriebegehäuse angeordnet und vollständig von diesem umschlossen sind.

Dadurch kann ein zuverlässiger Schutz dieser Komponenten vor im Betrieb der Quaderballenpresse auftretenden Verunreinigungen sichergestellt werden.

Bevorzugt kann die Auslösevorrichtung als eine Klauenkupplung ausgeführt sein, durch welche die Kegelradstufe mit der Stirnradstufe trieblich koppelbar ist. Die Betätigung bzw. Aktivierung der als Klauenkupplung ausgeführten Auslösevorrichtung leitet die Bindephase ein, wofür die Kegelradstufe mit der Stirnradstufe temporär trieblich gekoppelt wird.

Dazu kann die Klauenkupplung ein erstes Kupplungsteil, welches drehfest und axial verschieblich auf der Abtriebswelle angeordnet ist, und ein zweites Kupplungsteil, welches frei drehbar auf der Abtriebswelle gelagert ist, aufweisen. Durch das axial verschiebliche erste Kupplungsteil lässt sich die Klauenkupplung schalten, um den Bindevorgang auszulösen. Das frei drehbar auf der Abtriebswelle gelagerte zweite Kupplungsteil verhindert in ausgerückter Stellung der Klauenkupplung, dass während des Ballenbildungsvorgangs ein Drehmoment von der Abtriebswelle auf die Knoterwelle übertragen wird. Somit wird während des Ballenbildungsvorgangs auf die Antriebsstange, die durch den Kurbelarm mit der Knoterwelle verbunden ist, keine Drehbewegung übertragen, die zu einer Schwenkbewegung der Nadelschwinge führt.

Die höhere Geschwindigkeit der Bindenadeln bei der Bewegung der Nadelschwinge aus der Presskammerheraus, die durch die Unterstützung des teleskopierbaren Aktuators erreicht werden kann, sorgt dafür, dass die Knoterwelle und somit ein Teil der Auslösevorrichtung zum Auslösen des Bindevorgangs vorauseilt und somit ein einfacheres Entkoppeln ermöglicht wird.

Des Weiteren kann die Kegelradstufe ein auf der Antriebswelle angeordnetes oder mit der Antriebswelle verbindbares Kegelritzel und ein auf der Abtriebswelle angeordnetes Kegelrad aufweisen und die Stirnradstufe kann ein auf der Abtriebswelle auf dem zweiten Kupplungsteil drehfest angeordnetes Zahnrad aufweisen, welches mit einem auf der Knoterwelle drehfest angeordneten Gegenrad kämmt.

Weiterhin kann vorgesehen sein, dass das Zahnrad exzentrisch auf der Abtriebswelle und das Gegenrad exzentrisch auf der Knoterwelle angeordnet ist. Durch die jeweilige exzentrische Anordnung von Zahnrad und Gegenrad wird der Bewegungsablauf der Nadelschwinge und der daran angeordneten Bindenadeln zeitlich mit der Hubbewegung des Presskolbens in Übereinstimmung gebracht. Das Auslösen und Durchführen des Bindevorganges erfordert einerseits ein schnelles Ein- und Ausschwenken der Bindenadeln und andererseits eine ausreichende Verweildauer der eingeschwenkten Bindenadeln für das Zusammenwirken mit der zumindest einen Knotervorrichtung. Die jeweils exzentrische Anordnung von Zahnrad und Gegenrad dient dazu, Bewegungen zu steuern und sicherzustellen, dass die Bindenadeln stets rechtzeitig aus der Presskammer gezogen werden. Dies dient der Vermeidung einer Betriebssituation, in welcher der Presskolben mit der neuen zu verdichtenden Erntegutschicht gegen die Bindenadeln stößt und diese dabei beschädigt.

In der Ballenbildungsphase ist die triebliche Verbindung der Knoterwelle zum Getriebe durch die Auslösevorrichtung unterbrochen. Der mit der Abtriebswelle durch den Kurbelarm verbundene teleskopierbare Aktuator kann frei mit der Abtriebswelle mitdrehen.

In der Bindephase ist die Knoterwelle durch die Betätigung der Auslösevorrichtung trieblich mit der Abtriebswelle des Getriebes verbunden. Die mit der Knoterwelle durch den Kurbelarm verbundene Antriebsstange dreht mit der Knoterwelle und bewegt die Nadelschwinge aus ihrer Ruheposition in ihre Garnabgabeposition.

Gemäß einer bevorzugten Weiterbildung kann der teleskopierbare Aktuator an einem ersten Hebelarm angelenkt sein, der um die Schwenkachse schwenkbar an der Nadelschwinge angelenkt ist, wobei die Antriebsstange an einem zweiten Hebelarm angelenkt sein kann, der drehfest an der Nadelschwinge befestigt ist, wobei der erste Hebelarm mit dem zweiten Hebelarm durch ein Kraftübertragungselement verbunden ist. Durch das Kraftübertragungselement können von dem teleskopierbaren Aktuator in dessen Längsrichtung wirkende Kräfte auf den zweiten Hebelarm und von diesem auf die Nadelschwinge übertragen werden.

Insbesondere kann das Kraftübertragungselement durch seine Dimensionierung dazu ausgeführt sein, bei Überschreitung einer Scherkraftbelastung während einer in Richtung der Knotervorrichtung aufwärtsgerichteten Schwenkbewegung der Nadelschwinge die Verbindung zum Getriebe zu unterbrechen. Dies dient insbesondere dem Schutz des Getriebes sowie der zumindest einen Knotervorrichtung, wenn sich die Bindenadeln aufwärts in Richtung der zumindest einen Knotervorrichtung, d.h. in das Innere der Presskammer, bewegen. Durch das Abscheren des Kraftübertragungselementes wird die Kraft- und Bewegungsübertragung des teleskopierbaren Aktuators auf den zweiten Hebelarm unterbrochen. Hierzu kann das Kraftübertragungselement bevorzugt als Scherbolzen ausgeführt sein. Denkbar ist auch eine Ausführung des Kraftübertragungselementes als Scherschraube oder dergleichen.

Gemäß einer Weiterbildung kann der erste Hebelarm einen zur Schwenkachse radial beabstandeten Kurvenbahnabschnitt aufweisen, der in eine bogenförmige Aussparung mündet, wobei zur Begrenzung der Schwenkbewegung des ersten Hebelarmes ein an der Nadelschwinge angeordnetes Sicherungselement vorgesehen ist, welches in die bogenförmige Aussparung eingreift und als Anschlag des ersten Hebelarmes dient.

Das Sicherungselement kann durch seine Dimensionierung dazu ausgeführt sein, bei Überschreitung einer Scherkraftbelastung während einer abwärts gerichteten Schwenkbewegung der Nadelschwinge die Verbindung zum Getriebe zu unterbrechen. Hierzu kann das Sicherungselement bevorzugt als Scherbolzen, Scherschraube oder dergleichen ausgeführt sein.

Die Aufgabe wird ferner durch eine Quaderballenpresse mit den Merkmalen des nebengeordneten Anspruches 15 gelöst.

Gemäß dem Anspruch 15 wird eine Quaderballenpresse mit einer Bindeeinrichtung zum Knoten eines bandförmigen Bindemittels, welches zum Binden eines gepressten Ballens in einer Bindephase vorgesehen ist, vorgeschlagen, wobei die Bindeeinrichtung zumindest eine von einer Knoterwelle angetriebene Knotervorrichtung, eine um eine zur Knoterwelle parallel verlaufende Schwenkachse schwenkbare Nadelschwinge, an der Bindenadeln angeordnet sind, sowie eine Antriebseinheit umfasst, wobei die Antriebseinheit ein von einer Antriebswelle angetriebenes schaltbares Getriebe aufweist, welches dazu ausgeführt und eingerichtet ist, die zumindest eine Knotervorrichtung und die Nadelschwinge beim Auslösen der Bindephase durch eine Auslösevorrichtung anzutreiben, wobei zum Schwenken der Nadelschwinge ein Kurbelarm drehfest an der Knoterwelle angeordnet ist, an welchem eine Antriebsstange mit einem Ende angelenkt ist, welche mit ihrem anderen Ende an der Nadelschwinge angelenkt ist, wobei die Bindeeinrichtung nach einem der Ansprüche 1 bis 14 ausgebildet ist. Auf die erfindungsgemäßen Vorteile der Bindeeinrichtung darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Teilansicht einer Quaderballenpresse;
- Fig. 2: schematisch und exemplarisch eine Draufsicht auf eine ein Getriebe umfassende Antriebseinheit der Quaderballenpresse;
- Fig. 3: schematisch und exemplarisch eine Detailansicht einer Nadelschwinge, welche sich in einer Ruheposition außerhalb einer Presskammer der Quaderballenpresse befindet;
- Fig. 4: schematisch und exemplarisch eine erste Betriebssituation der Quaderballenpresse; und
- Fig. 5: schematisch und exemplarisch eine zweite Betriebssituation der Quaderballenpresse.

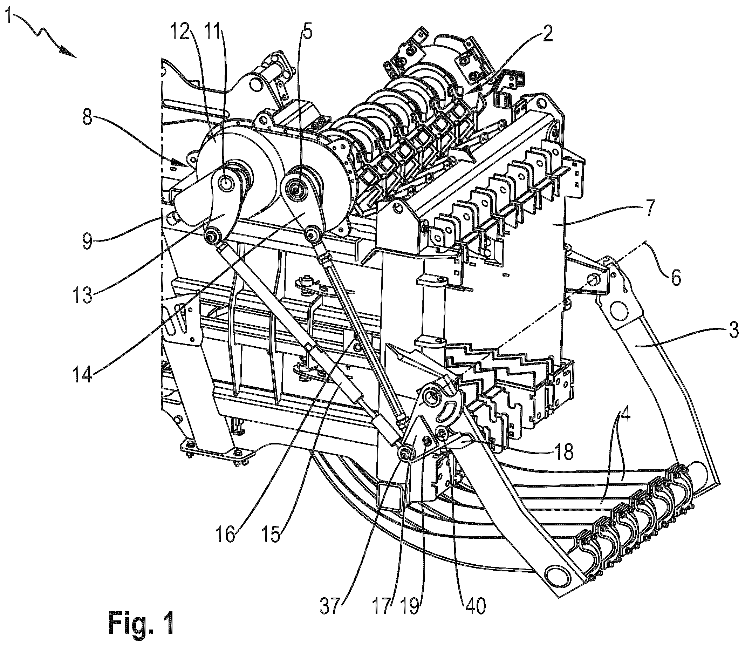

In Fig. 1 ist schematisch und exemplarisch eine Teilansicht einer Quaderballenpresse 1 dargestellt. Die Quaderballenpresse 1 ist mit einer in den Figuren nicht dargestellten landwirtschaftlichen Arbeitsmaschine, insbesondere einem Traktor, koppelbar, so dass die Quaderballenpresse 1 und die landwirtschaftliche Arbeitsmaschine gemeinsam einen sogenannten landwirtschaftlichen Zug ausbilden.

Die Quaderballenpresse 1 umfasst eine als Pick-Up bekannte Aufnahmevorrichtung zur Aufnahme von im Schwad auf einer landwirtschaftlichen Fläche abgelegten Ernteguts, einen Schneidrotor zum Zerkleinern des aufgenommenen Ernteguts, einen Raffer zum Vorverdichten des zerkleinerten Ernteguts und Zuführen desselben in eine Presskammer der Quaderballenpresse 1 sowie einen in der Presskammer der Quaderballenpresse 1 zwischen Endlagen beweglich angeordneten Presskolben zum Pressen des vorverdichteten Ernteguts zu einem Quaderballen. In der Presskammer wird das vorverdichtete Erntegut mit dem Presskolben, der in der Presskammer zyklisch hin und her bewegt wird, zu dem Quaderballen gepresst. Weiterhin umfasst die Quaderballenpresse 1 eine Bindeeinrichtung zum Knoten eines bandförmigen Bindemittels, welches zum Binden eines gepressten Ballens vorgesehen ist.

Die Quaderballenpresse 1 weist einen nicht näher dargestellten Antriebsstrang auf, der mittels einer landwirtschaftlichen Arbeitsmaschine, insbesondere eines Traktors, mit einer Antriebsleistung versorgt. Hierzu umfasst die landwirtschaftliche Arbeitsmaschine heckseitig einen an sich bekannten Zapfwellenabtrieb.

Die Bindeeinrichtung umfasst zumindest eine von einer Knoterwelle 5 angetriebene Knotervorrichtung 2, um eine zur Knoterwelle 5 parallele Schwenkachse 6 schwenkbare, an einer Nadelschwinge 3 angeordnete Bindenadeln 4 sowie eine Antriebseinheit 8. Die Nadelschwinge 3 ist an einem die Presskammer umgebenden Gehäuse 7 angelenkt. Die an der Nadelschwinge 3 angeordneten Bindenadeln 4 wirken mit der Knotervorrichtung 2 beim Binden des gepressten Ballens zusammen.

Die Antriebseinheit 8 weist ein von einer Antriebswelle 9 angetriebenes schaltbares Getriebe 10 auf. Das schaltbares Getriebe 10 ist dazu ausgeführt und eingerichtet, die zumindest eine Knotervorrichtung 2 und die Bindenadeln 4 beim Auslösen eines Bindevorganges anzutreiben. Die Antriebswelle 9 treibt eine Abtriebswelle 11 des Getriebes 10 an. Das Getriebe 10 ist von einem Getriebegehäuse 12 umschlossen.

Der Antriebsstrang der Quaderballenpresse 1 umfasst die Antriebswelle 9, die wiederum einen Drehmomenteneingangsanschluss für den Antriebsstrang aufweist, mittels dem der Antriebsstrang der Quaderballenpresse 1 mit dem Zapfwellenabtrieb der landwirtschaftlichen Arbeitsmaschine verbindbar ist.

An der Knoterwelle 5 und der Abtriebswelle 11 ist jeweils ein Kurbelarm 13 ,14 drehfest angeordnet. An dem an der Abtriebswelle 11 angeordneten Kurbelarm 13 ist ein teleskopierbarer Aktuator 15 mit einem Ende angelenkt. Der teleskopierbare Aktuator 15 ist mit seinem anderen Ende an der Nadelschwinge 3 angelenkt. An dem an der Knoterwelle 5 angeordneten Kurbelarm 14 ist eine Antriebsstange 16 mit einem Ende angelenkt, welche mit ihrem anderen Ende an der Nadelschwinge 3 angelenkt ist. Der teleskopierbare Aktuator 15 ist insbesondere als teleskopierbare Antriebsstange ausgeführt.

Die Darstellung in Fig. 1 zeigt eine erfindungsgemäße Ausführungsform, gemäß welcher der teleskopierbare Aktuator 15 an einem ersten Hebelarm 17 um eine Drehachse 37 schwenkbar angelenkt ist. Der erste Hebelarm 17 ist um die Schwenkachse 6 schwenkbar an der Nadelschwinge 3 angelenkt. Die Drehachse 37 ist zur Schwenkachse 6 radial beabstandet am ersten Hebelarm 17 angeordnet. Die von dem Kurbelarm 13 auf den teleskopierbaren Aktuator 15 übertragene Drehung führt zu einer linearen Bewegung des teleskopierbaren Aktuators 15, bei welcher dieser bei jeder Drehung der Abtriebswelle 11 aus- und eingezogen wird.

Die Antriebsstange 16 ist an einem zweiten Hebelarm 18 angelenkt, der drehfest an der an der Nadelschwinge 3 befestigt ist. Der erste Hebelarm 17 ist mit dem zweiten Hebelarm 18 durch ein Kraftübertragungselement 19 verbunden. Durch das Kraftübertragungselement 19 können von dem teleskopierbaren Aktuator 15 in dessen Längsrichtung wirkende Kräfte auf den zweiten Hebelarm 18 und von diesem auf die Nadelschwinge 3 übertragen werden.

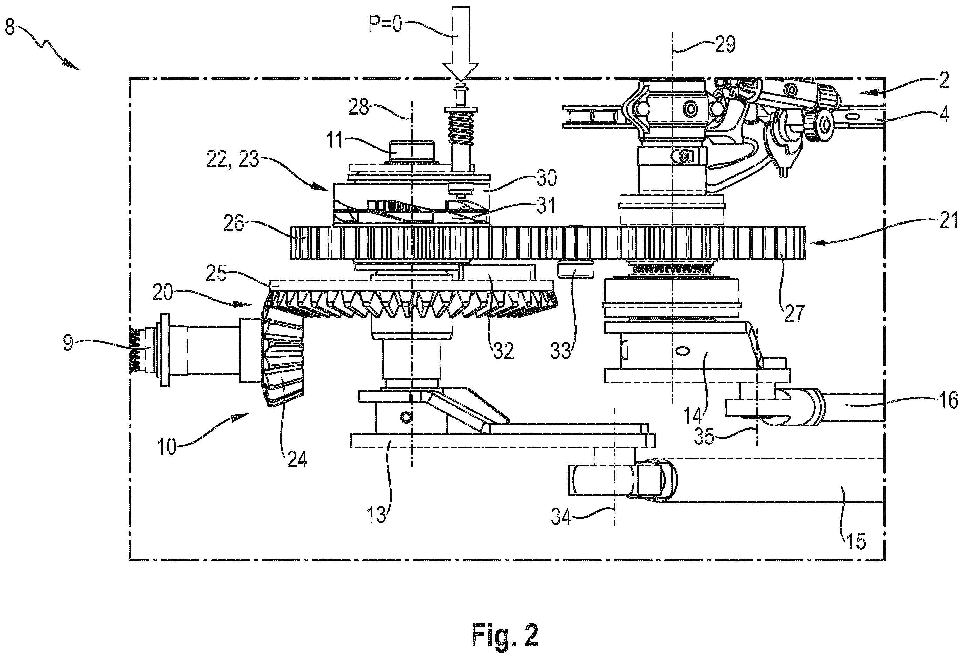

In Fig. 2 ist schematisch und exemplarisch eine Draufsicht auf die das Getriebe 10 umfassende Antriebseinheit 8 der Quaderballenpresse 1 dargestellt. Die Darstellung dient der Veranschaulichung von Komponenten des schaltbaren Getriebes 10, die von dem Getriebegehäuse 12 zum Schutz vor äußeren Einflüssen umschlossen sind.

Eine Kegelradstufe 20 und eine durch die Kegelradstufe 20 mittels der Abtriebswelle 11 antreibbare Stirnradstufe 21 sowie eine als Klauenkupplung 23 ausgeführte Auslösevorrichtung 22 bilden die Komponenten des Getriebes 10, die von dem Getriebegehäuse 12 umschlossen sind. Mittels der Auslösevorrichtung 22 wird der Bindevorgang ausgelöst, wenn der gepresste Ballen eine vorgegebene Ballenlänge erreicht oder überschritten ist.

Das Übertragen einer Kraft von dem teleskopierbaren Aktuator 15 durch den ersten Hebelarm 17 und das Kraftübertragungselement 19 auf den zweiten Hebelarm 18 ist von der Schaltstellung der Auslösevorrichtung 22 abhängig.

In Abhängigkeit vom Drehwinkel des Kurbelarms 13 und der Position der Nadelschwinge 3 kann der teleskopierbare Aktuator 15 während der Bindephase eine Zugkraft oder eine Druckraft auf den zweiten Hebelarm 18 übertragen.

Die Kegelradstufe 20 weist ein auf der Antriebswelle 9 angeordnetes oder mit dieser verbindbares Kegelritzel 24 und ein auf der Abtriebswelle 11 angeordnetes Kegelrad 25 auf.

Die Stirnradstufe 21 weist ein auf der Abtriebswelle 11 drehbar gelagertes Zahnrad 26, welches mit einem auf der Knoterwelle 5 drehfest angeordneten Gegenrad 27 kämmt. Das Zahnrad 26 ist exzentrisch auf der Abtriebswelle 11 und das Gegenrad 27 ist exzentrisch auf der Knoterwelle 5 angeordnet.

Eine Drehachse der Abtriebswelle 11 ist mit dem Bezugszeichen 28 und eine Drehachse der Knoterwelle 5 ist mit dem Bezugszeichen 29 bezeichnet.

Die Klauenkupplung 23 weist zwei Kupplungsteile 30, 31 auf. Das eine Kupplungsteil 30 ist drehfest und axial verschieblich auf der Abtriebswelle 11 angeordnet. Das zum axial verschieblichen Kupplungsteil 30 komplementäre Kupplungsteil 31 ist frei drehbar auf der Abtriebswelle 11 gelagert. Auf dem frei drehbaren Kupplungsteil 31 ist das Zahnrad 26 der Stirnradstufe 21 drehfest angeordnet. Die Klauenkupplung 23 befindet sich in der in Fig. 2 dargestellten Ballenbildungsphase der Quaderballenpresse 1 in ausgekuppelter Stellung.

Die beiden Kupplungsteile 30, 31 weisen Klauen auf, die keilförmig ausgebildet und sich aus den jeweiligen Stirnflächen der Kupplungsteile 30, 31 erheben. Die keilförmige Ausbildung entsteht dadurch, dass sich die Klauen aus der Ringfläche der Stirnflächen heraus erheben. Dadurch übertragen die Klauen in eine Richtung ein Drehmoment, wobei in der anderen Richtung kein Drehmoment übertragen wird.

Durch eine Beaufschlagung des axial verschieblich auf der Abtriebswelle 11 angeordneten Kupplungsteils 30 mit einem pneumatischen oder hydraulischen Druck P oder einer in axialer Richtung wirkenden Kraft lässt sich die Klauenkupplung 23 in eine Stellung überführen, in der die Klauen der Kupplungsteile 30, 31 formschlüssig ineinandergreifen.

In Fig. 2 ist die Auslösevorrichtung 22 respektive die Klauenkupplung 23 ohne Druckbeaufschlagung in ihrer Bereitschaftsstellung gezeigt, d.h. der Druck P ist gleich Null. Das axial verschiebliche Kupplungsteil 30 ist gegenüber dem Kupplungsteil 31 soweit verdreht, dass die komplementären Klauen aufeinander stehen. Es findet keine Drehmomentüberragung durch die Klauenkupplung 23 statt, so dass die zumindest eine Knotervorrichtung 5 antriebslos ist. Aufgrund der fehlenden Druckbeaufschlagung verbleiben die beiden Kupplungsteile 30, 31 in dieser Bereitschaftsstellung der Auslösevorrichtung 22.

In der Bereitschaftsstellung der Auslösevorrichtung 22 rotiert der durch die Abtriebswelle 11 angetriebene Kurbelarm 13 permanent um die Drehachse 28, während der Kurbelarm 14 wegen der ausgerückten Position der Kupplungsteile 30, 31 stillsteht. Die Abtriebswelle 11 dreht sich relativ zu dem darauf mittels des Kupplungsteils 31 drehbar gelagerten Zahnrad 26. Durch die Rotation des Kurbelarms 13 und der damit verbundenen Bewegung und Längenänderung des teleskopierbaren Aktuators 15 wird sichergestellt, dass sich die Bindenadeln 4 während der Ballenbildungsphase außerhalb der Presskammer befinden. Die Nadelschwinge 3 befindet sich dabei in einer Ruheposition. Hierzu weist der teleskopierbare Aktuator 15 eine Auszuglänge auf, so dass der Kurbelarm 13 während der Ballenbildungsphase vollständige Umdrehungen um die Drehachse 28 der Abtriebswelle 9 ausführen kann, während die Nadelschwinge 3 in ihrer Ruheposition verbleibt.

Auf der dem Zahnrad 26 zugewandten Rückseite des Kegelrades 25 ist ein Nockenhebel 32 und auf ihrer der Knotervorrichtung 2 abgewandten Seite des Gegenrades 27 ist eine Nockenrolle 33 angeordnet. Die Funktion und das Zusammenwirken von Nockenhebel 32 und Nockenrolle 33 wird weiter unten näher erläutert.

Eine Drehachse am Kurbelarm 13, um welche der teleskopierbare Aktuator 15 drehbar ist, ist mit dem Bezugszeichen 34 bezeichnet. Eine Drehachse am Kurbelarm 14, um welche die Antriebsstange 16 drehbar ist, ist mit dem Bezugszeichen 35 bezeichnet.

Zur Aktivierung der Auslösevorrichtung 22 ist die Klauenkupplung 23 mit einem Druck P größer als Null beaufschlagt. Die Klauen der beiden Kupplungsteile 30, 31 greifen formschlüssig ineinander. Hierzu wird das axial verschiebliche Kupplungsteil 30 durch die Druckbeaufschlagung mit dem Druck P axial eingerückt. Durch die Betätigung respektive Aktivierung der Auslösevorrichtung 22 werden eine Rotationsbewegung und ein Drehmoment durch die Stirnradstufe 21 auf die Knoterwelle 5 übertragen. Die Quaderballenpresse 1 befindet sich in der Bindephase. In der Bindephase wirken die zumindest eine Knotervorrichtung 2 und die Bindenadeln 4 zusammen, um das bandförmige Bindemittel aus Oberfaden und Unterfaden zu verknoten.

Die erfindungsgemäße Ausgestaltung führt dazu, dass sichergestellt wird, dass sich die Bindenadeln 4 während einer Ballenbildungsphase bei jedem Presskolbenhub außerhalb der Presskammer befinden. Ebenso wird sichergestellt, dass in jedem Betriebszustand, regelmäßig und unregelmäßig, die Bindenadeln 4 aus der Presskammer bewegt werden. Weiterhin sorgt der zusätzliche teleskopierbare Aktuator 15 dafür, dass die Geschwindigkeit der Bindenadeln 4 bei ihrer Bewegung aus der Presskammer heraus erhöht wird, insgesamt aber eine gleichmäßige Bewegung der Bindenadeln 2 über den gesamten Bindevorgang stattfindet.

Am Ende der Bindephase wird die Auslösevorrichtung 22 deaktiviert, indem der Druck P, mit dem die Auslösevorrichtung 22 zum Auslösen der Bindephase beaufschlagt wurde, wieder auf null gesetzt wird.

Das axial verschiebliche Kupplungsteil 30 und das komplementäre Kupplungsteil 31 lösen sich wegen der fehlenden Druckbeaufschlagung zunächst in Umfangsrichtung voneinander, wobei sich zwischen benachbarten Klauen der Kupplungsteil 30, 31 ein Spalt ausbildet. In dieser Stellung, in der kein Drehmoment zwischen den beiden Kupplungsteilen 30, 31 übertragen wird, lässt sich die Klauenkupplung 23 lösen.

In dieser Übergangsphase wird die Nadelschwinge 3 mit den daran angeordneten Bindenadeln 4 durch den teleskopierbaren Aktuator 15 zurückgeschwenkt, um die Presskammer freizugeben. Die Antriebsstange 16 wird dabei nicht mehr über die Stirnradstufe 21 angetrieben, sondern durch die Schwenkbewegung der Nadelschwinge 3 um die Schwenkachse 6. Die Antriebsstange 16 überträgt die Schwenkbewegung der Nadelschwinge 3 auf die zumindest eine Knotervorrichtung 2, um diese anzutreiben.

Um die Nadelschwinge 3 in ihre Ausgangsposition respektive Ruheposition zu überführen, wird die Rotationsbewegung der Knoterwelle 5 durch den Nockenhebel 32 unterstützt, der auf der dem Zahnrad 26 zugewandten Rückseite des Kegelrades 25 exzentrisch zur Drehachse 28 angeordnet ist. Die auf ihrer der Knotervorrichtung 2 abgewandten Seite des exzentrisch auf der Knoterwelle 5 angeordneten Gegenrades 27 angeordnete Nockenrolle 33 wird durch den Nockenhebel 32 entsprechend der Rotationsrichtung des Kegelrades 25 temporär mitgenommen. Da für die letzte Umdrehung der Knoterwelle 5 ein Drehmoment erforderlich ist, welches durch die Schwenkbewegung der Nadelschwinge 3 bei ihrem Zurückschwenken alleine nicht bereitgestellt werden kann, übernehmen der Nockenhebel 32 und die auf dem exzentrisch auf der Knoterwelle 5 angeordneten Gegenrad 27 befestigte Nockenrolle 33 diese Funktion. Dabei überträgt der Nockenhebel 32 das vom Kegelrad 25 übertragene Drehmoment auf die Nockenrolle 33.

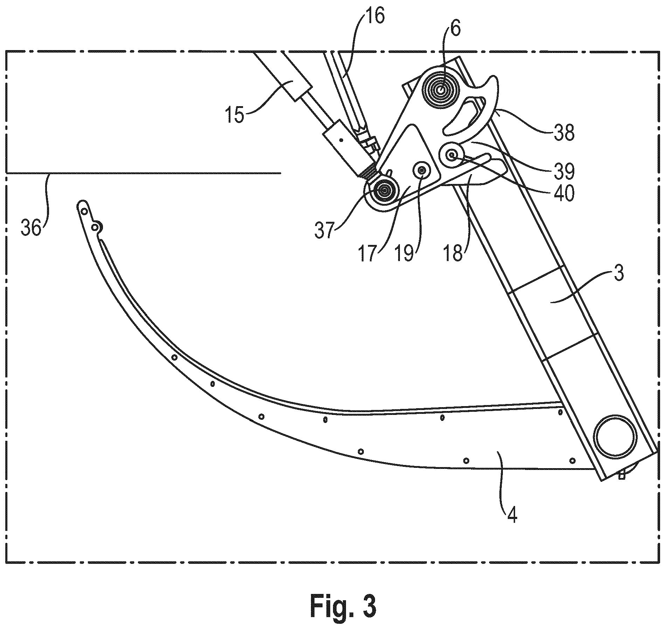

Die Darstellung in Fig. 3 zeigt schematisch und exemplarisch eine Detailansicht der Nadelschwinge 3, welche sich in ihrer Ruheposition außerhalb der Presskammer der Quaderballenpresse 1 befindet. Eine lediglich exemplarisch angedeutete untenseitige Begrenzung der Presskammer ist mit dem Bezugszeichen 36 bezeichnet. Die Bindenadeln 4 befinden sich in der dargestellten Position der Nadelschwinge 3 unterhalb der Begrenzung 36.

Der erste Hebelarm 17, an dem der um die Drehachse 37 schwenkbare teleskopierbare Aktuator 15 angelenkt ist, ist durch das Kraftübertragungselement 19 mit dem zweiten Hebelarm 18 verbunden. Durch das Kraftübertragungselement 18 können von dem teleskopierbaren Aktuator 15 in dessen Längsrichtung wirkende Kräfte auf den zweiten Hebelarm 18 übertragen werden. Befindet sich die Auslösevorrichtung 22 respektive die Klauenkupplung 23 in ihrer Bereitschaftsstellung, wird von dem teleskopierbaren Aktuator 15 keine Kraft auf den ersten Hebelarm 17 übertragen. Das Ausziehen und Einziehen des teleskopierbaren Aktuators 15 während der Rotation des Kurbelarms 13 mit der Abtriebswelle 11 belässt die Nadelschwinge 3 in ihrer Ruheposition.

Der zweite Hebelarm 18, der drehfest an der an der Nadelschwinge 3 befestigt ist, überträgt bei aktivierter Auslösevorrichtung 22 die Rotation des Kurbelarms 14, an dem die Antriebsstange 15 angeordnet ist, als aufwärts in Richtung der Presskammer gerichtete Schwenkbewegung auf die Nadelschwinge 3. Die Bindenadeln 4 können mit der zumindest einen Knotervorrichtung 2 für die Dauer der Bindephase zusammenwirken.

Insbesondere kann das Kraftübertragungselement 19 durch seine Dimensionierung dazu ausgeführt sein, bei Überschreitung einer Scherkraftbelastung während einer in Richtung der Knotervorrichtung 2 aufwärtsgerichteten Schwenkbewegung der Nadelschwinge 3 die Verbindung zum Getriebe 10 zu unterbrechen. Dies dient insbesondere dem Schutz des Getriebes 10 sowie der zumindest einen Knotervorrichtung 2, wenn sich die Bindenadeln 4 aufwärts in Richtung der zumindest einen Knotervorrichtung 2, d.h. in das Innere der Presskammer hinein, bewegen. Durch das Abscheren des Kraftübertragungselementes 19 wird die Kraft- und Bewegungsübertragung des teleskopierbaren Aktuators 15 auf den zweiten Hebelarm 18 unterbrochen. Hierzu kann das Kraftübertragungselement 19 bevorzugt als Scherbolzen ausgeführt sein. Denkbar ist auch eine Ausführung des Kraftübertragungselementes 19 als Scherschraube oder dergleichen.

Der erste Hebelarm 17 weist einen zur Schwenkachse 6 radial beabstandeten Kurvenbahnabschnitt 38 auf, der in eine bogenförmige Aussparung 39 mündet.

Zur Begrenzung der Schwenkbewegung des ersten Hebelarmes 17 bei einer Abwärtsbewegung der Nadelschwinge 3 ist ein an der Nadelschwinge 3 angeordnetes Sicherungselement 40 vorgesehen ist, welches in die bogenförmige Aussparung 39 eingreift und als Anschlag für die Schwenkbewegung des ersten Hebelarmes 17 dient. Das mit der bogenförmigen Aussparung 39 zusammenwirkende Sicherungselement 40 begrenzt die Schwenkbewegung des ersten Hebelarmes 17 um die Schwenkachse 6. Das Sicherungselement 40 wird durch den Kurvenbahnabschnitt 38 geführt.

Das Sicherungselement 40 ist durch seine Dimensionierung dazu ausgeführt, bei Überschreitung einer Scherkraftbelastung während einer abwärts gerichteten Schwenkbewegung der Nadelschwinge 3 die Verbindung zum Getriebe 10 zu unterbrechen. Durch das Abscheren des Sicherungselementes 40 wird die Kraft- und Bewegungsübertragung des teleskopierbaren Aktuators 15 auf die Nadelschwinge 3 unterbrochen. Hierzu kann das Sicherungselement 40 bevorzugt als Scherbolzen oder Schwerschraube ausgeführt sein.

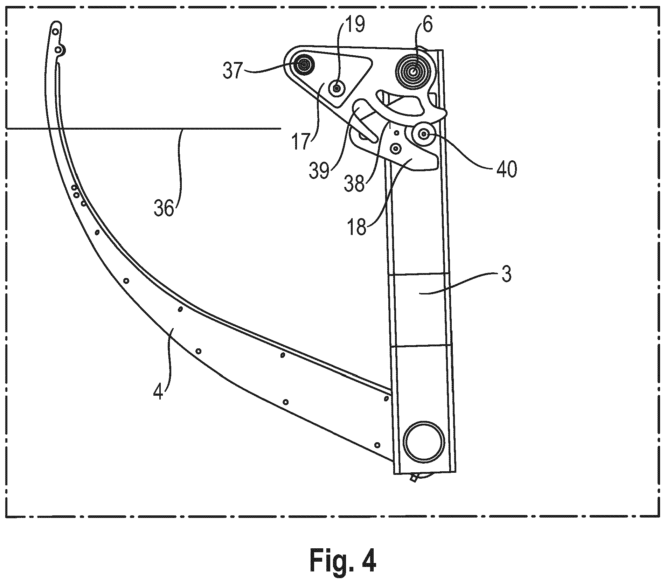

In Fig. 4 ist schematisch und exemplarisch eine erste Betriebssituation der Quaderballenpresse 1 dargestellt, in welcher während der Aufwärtsbewegung der Nadelschwinge 3 eine von dem - hier nicht gezeigten - teleskopierbaren Aktuator 15 übertragene Zugkraft auf den ersten Hebelarm 17 einwirkt, welche zum Abscheren des Kraftübertragungselementes 19 führt. Hierdurch wird die Kraftübertragung durch den teleskopierbaren Aktuator 15 zwischen dem Getriebe 10 und der Nadelschwinge 3 unterbrochen. Die Bindenadeln 4 befinden sich dabei abschnittsweise in der Presskammer, was durch die Position der Enden der Bindenadeln 4 oberhalb der Begrenzung 36 veranschaulicht ist.

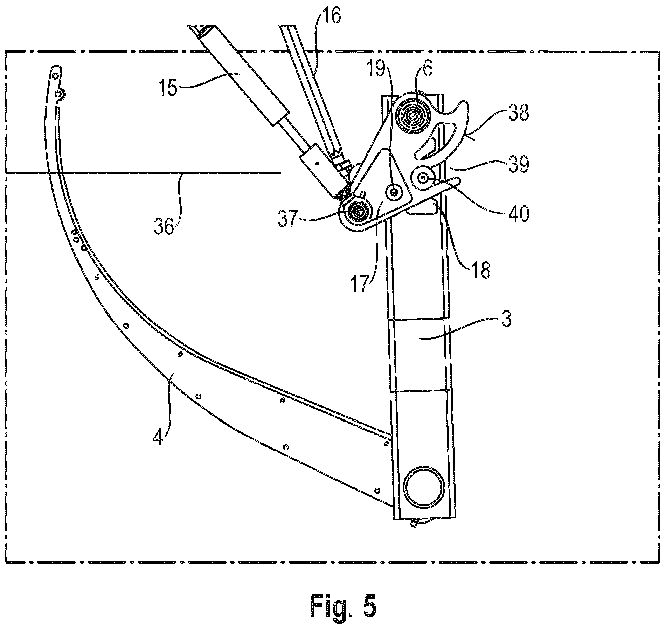

Die Darstellung in Fig. 5 zeigt schematisch und exemplarisch eine zweite Betriebssituation der Quaderballenpresse 1, in welcher während der Abwärtsbewegung der Nadelschwinge 3 eine von dem teleskopierbaren Aktuator 15 übertragene Druckkraft auf den ersten Hebelarm 17 einwirkt, welche zum Abscheren des Sicherungselementes 40 führt. Hierdurch wird die Kraftübertragung durch den teleskopierbaren Aktuator 15 zwischen dem Getriebe 10 und der Nadelschwinge 3 unterbrochen. Auch hier befinden sich die Bindenadeln 4 abschnittsweise in der Presskammer, was durch die Position der Enden der Bindenadeln 4 oberhalb der Begrenzung 36 veranschaulicht ist.

**Bezugszeichenliste**

| | | | |
|---|---|---|---|
| 1 | Quaderballenpresse | 34 | Drehachse |
| 2 | Knotervorrichtung | 35 | Drehachse |
| 3 | Nadelschwinge | 36 | Begrenzung |
| 4 | Bindenadel | 37 | Drehachse |
| 5 | Knoterwelle | 38 | Kurvenbahnabschnitt |
| 6 | Schwenkachse | 39 | Aussparung |
| 7 | Gehäuse | 40 | Sicherungselement |
| 8 | Antriebseinheit | | |
| 9 | Antriebswelle | P | Druck |
| 10 | Getriebe | | |
| 11 | Abtriebswelle | | |
| 12 | Getriebegehäuse | | |
| 13 | Kurbelarm | | |
| 14 | Kurbelarm | | |
| 15 | Aktuator | | |
| 16 | Antriebsstange | | |
| 17 | Erster Hebelarm | | |
| 18 | Zweiter Hebelarm | | |
| 19 | Kraftübertragungselement | | |
| 20 | Kegelradstufe | | |
| 21 | Stirnradstufe | | |
| 22 | Auslösevorrichtung | | |
| 23 | Klauenkupplung | | |
| 24 | Kegelritzel | | |
| 25 | Kegelrad | | |
| 26 | Zahnrad | | |
| 27 | Gegenrad | | |
| 28 | Drehachse | | |
| 29 | Drehachse | | |
| 30 | Kupplungsteil | | |
| 31 | Kupplungsteil | | |
| 32 | Nockenhebel | | |
| 33 | Nockenrolle | | |

## Patentansprüche

1. Bindeeinrichtung für eine Quaderballenpresse (1) zum Knoten eines bandförmigen Bindemittels, welches zum Binden eines gepressten Ballens in einer Bindephase vorgesehen ist, wobei die Bindeeinrichtung zumindest eine von einer Knoterwelle (5) angetriebene Knotervorrichtung (2), eine um eine zur Knoterwelle (5) parallel verlaufende Schwenkachse (6) schwenkbare Nadelschwinge (3), an der Bindenadeln (4) angeordnet sind, sowie eine Antriebseinheit (8) umfasst, wobei die Antriebseinheit (8) ein von einer Antriebswelle (9) angetriebenes schaltbares Getriebe (10) aufweist, welches dazu ausgeführt und eingerichtet ist, die zumindest eine Knotervorrichtung (2) und die Nadelschwinge (3) beim Auslösen einer Bindephase durch eine Auslösevorrichtung (22) anzutreiben, wobei zum Schwenken der Nadelschwinge (3) ein Kurbelarm (14) drehfest an der Knoterwelle (5) angeordnet ist, an welchem eine Antriebsstange (16) mit einem Ende angelenkt ist, welche mit ihrem anderen Ende an der Nadelschwinge (3) angelenkt ist, **dadurch gekennzeichnet, dass** die Nadelschwinge (3) durch einen zusätzlichen teleskopierbaren Aktuator (15) mit einer Abtriebswelle (11) des Getriebes (10) gekoppelt ist, um die Nadelschwinge (3) während der Bindephase anzutreiben.

2. Bindeeinrichtung nach Anspruch 1, **dadurch gekennzeichnet, dass** an der Abtriebswelle (11) ein Kurbelarm (13) drehfest angeordnet ist, an welchem der teleskopierbare Aktuator (15) mit einem Ende angelenkt ist, welcher mit seinem anderen Ende an der Nadelschwinge (3) angelenkt ist.

3. Bindeeinrichtung nach Anspruch 2, **dadurch gekennzeichnet, dass** der teleskopierbare Aktuator (15) eine Auszuglänge aufweist, so dass der Kurbelarm (13) während einer Ballenbildungsphase vollständige Umdrehungen mit der Abtriebswelle (11) ausführt, wobei die Nadelschwinge (3) in ihrer Ruheposition verbleibt.

4. Bindeeinrichtung nach einem der Ansprüche 1 bis 3, **dadurch gekennzeichnet, dass** das schaltbare Getriebe (10) eine Kegelradstufe (20) und eine durch die Kegelradstufe (20) mittels der Abtriebswelle (11) antreibbare Stirnradstufe (21) aufweist.

5. Bindeeinrichtung nach Anspruch 4, **dadurch gekennzeichnet, dass** die Auslösevorrichtung (22) als eine Klauenkupplung (23) ausgeführt ist, durch welche die Kegelradstufe (20) mit der Stirnradstufe (21) trieblich koppelbar ist.

6. Bindeeinrichtung nach Anspruch 5, **dadurch gekennzeichnet, dass** die Klauenkupplung (23) ein erstes Kupplungsteil (30), welches drehfest und axial verschieblich auf der Abtriebswelle (11) angeordnet ist, und ein zweites Kupplungsteil (31), welches frei drehbar auf der Abtriebswelle (11) gelagert ist, aufweist.

7. Bindeeinrichtung nach Anspruch 6, **dadurch gekennzeichnet, dass** die Kegelradstufe (20) ein auf der Antriebswelle (9) angeordnetes oder mit dieser verbindbares Kegelritzel (24) und ein auf der Abtriebswelle (11) angeordnetes Kegelrad (25) aufweist und die Stirnradstufe (21) ein auf der Abtriebswelle (11) auf dem zweiten Kupplungsteil (31) drehfest angeordnetes Zahnrad (26) aufweist, welches mit einem auf der Knoterwelle (5) drehfest angeordneten Gegenrad (27) kämmt.

8. Bindeeinrichtung nach Anspruch 7, **dadurch gekennzeichnet, dass** das Zahnrad (26) exzentrisch auf der Abtriebswelle (11) und das Gegenrad (27) exzentrisch auf der Knoterwelle (5) angeordnet ist.

9. Bindeeinrichtung nach einem der vorangehenden Ansprüche, **dadurch gekennzeichnet, dass** in der Ballenbildungsphase die triebliche Verbindung der Knoterwelle (5) zum Getriebe (10) durch die Auslösevorrichtung (22) unterbrochen ist.

10. Bindeeinrichtung nach einem der vorangehenden Ansprüche, **dadurch gekennzeichnet, dass** die Knoterwelle (5) in der Bindephase durch die Betätigung der Auslösevorrichtung (22) trieblich mit der Abtriebswelle (11) des Getriebes (10) verbunden ist.

11. Bindeeinrichtung nach einem der vorangehenden Ansprüche, **dadurch gekennzeichnet, dass** der teleskopierbare Aktuator (15) an einem ersten Hebelarm (17) angelenkt ist, der um die Schwenkachse (6) schwenkbar an der Nadelschwinge (3) angelenkt ist, und dass die Antriebsstange (16) an einem zweiten Hebelarm (18) angelenkt ist, der drehfest an der Nadelschwinge (3) befestigt ist, wobei der erste Hebelarm (17) mit dem zweiten Hebelarm (18) durch ein Kraftübertragungselement (19) verbunden ist.

12. Bindeeinrichtung nach Anspruch 11, **dadurch gekennzeichnet, dass** das Kraftübertragungselement (19) durch seine Dimensionierung dazu ausgeführt ist, bei Überschreitung einer Scherkraftbelastung während einer in Richtung der Knotervorrichtung (2) aufwärtsgerichteten Schwenkbewegung der Nadelschwinge (3) die Verbindung zum Getriebe (10) zu unterbrechen.

13. Bindeeinrichtung nach einem der vorangehenden Ansprüche, **dadurch gekennzeichnet, dass** der erste Hebelarm (17) einen zur Schwenkachse (6) radial beabstandeten Kurvenbahnabschnitt (38) aufweist, der in eine bogenförmige Aussparung (39) mündet, wobei zur Begrenzung der Schwenkbewegung des ersten Hebelarmes (17) ein an der Nadelschwinge (3) angeordnetes Sicherungselement (40) vorgesehen ist, welches in die bogenförmige Aussparung (39) eingreift und als Anschlag des ersten Hebelarmes (17) dient.

14. Bindeeinrichtung nach Anspruch 13, **dadurch gekennzeichnet, dass** das Sicherungselement (40) durch seine Dimensionierung dazu ausgeführt ist, bei Überschreitung einer Scherkraftbelastung während einer abwärts gerichteten Schwenkbewegung der Nadelschwinge (3) die Verbindung zum Getriebe (10) zu unterbrechen.

15. Quaderballenpresse mit einer Bindeeinrichtung zum Knoten eines bandförmigen Bindemittels, welches zum Binden eines gepressten Ballens in einer Bindephase vorgesehen ist, wobei die Bindeeinrichtung zumindest eine von einer Knoterwelle (5) angetriebene Knotervorrichtung (2), eine um eine zur Knoterwelle (5) parallel verlaufende Schwenkachse (6) schwenkbare Nadelschwinge (3), an der Bindenadeln (4) angeordnet sind, sowie eine Antriebseinheit (8) umfasst, wobei die Antriebseinheit (8) ein von einer Antriebswelle (9) angetriebenes schaltbares Getriebe (10) aufweist, welches dazu ausgeführt und eingerichtet ist, die zumindest eine Knotervorrichtung (2) und die Nadelschwinge (3) beim Auslösen der Bindephase durch eine Auslösevorrichtung (22) anzutreiben, wobei zum Schwenken der Nadelschwinge (3) ein Kurbelarm (14) drehfest an der Knoterwelle (5) angeordnet ist, an welchem eine Antriebsstange (16) mit einem Ende angelenkt ist, welche mit ihrem anderen Ende an der Nadelschwinge (3) angelenkt ist, **dadurch gekennzeichnet, dass** die Bindeeinrichtung nach einem der Ansprüche 1 bis 14 ausgebildet ist.

## Claims

1. Binding device for a square baler (1) for knotting a strip-shaped binding means which is provided for binding a compressed bale in a binding phase, wherein the binding device comprises at least one knotter apparatus (2) driven by a knotter shaft (5), a needle rocker (3) which is pivotable about a pivot axis (6) running parallel to the knotter shaft (5) and on which binding needles (4) are arranged, and a drive unit (8), wherein the drive unit (8) has a switchable transmission (10) which is driven by a drive shaft (9) and is designed and configured to drive the at least one knotter apparatus (2) and the needle rocker (3) by means of a triggering apparatus (22) when a binding phase is triggered, wherein, for pivoting the needle rocker (3), a crank arm (14) is arranged rotationally conjointly on the knotter shaft (5), on which crank arm a drive rod (16) is articulated at one end and is articulated at its other end on the needle rocker (3), **characterized in that** the needle rocker (3) is coupled to an output shaft (11) of the transmission (10) by an additional telescopic actuator (15) in order to drive the needle rocker (3) during the binding phase.

2. Binding device according to Claim 1, **characterized in that** a crank arm (13) is arranged rotationally conjointly on the output shaft (11), on which crank arm the telescopic actuator (15) is articulated at one end and is articulated at its other end on the needle rocker (3).

3. Binding device according to Claim 2, **characterized in that** the telescopic actuator (15) has an extension length, such that the crank arm (13) carries out full revolutions with the output shaft (11) during a bale-forming phase, with the needle rocker (3) remaining in its inoperative position.

4. Binding device according to one of Claims 1 to 3, **characterized in that** the switchable transmission (10) has a bevel gear stage (20) and a spur gear stage (21) which is drivable by the bevel gear stage (20) by means of the output shaft (11).

5. Binding device according to Claim 4, **characterized in that** the triggering apparatus (22) is designed as a claw clutch (23), by means of which the bevel gear stage (20) is couplable in terms of drive to the spur gear stage (21).

6. Binding device according to Claim 5, **characterized in that** the claw clutch (23) has a first clutch part (30), which is arranged rotationally conjointly and axially displaceably on the output shaft (11), and a second clutch part (31), which is mounted freely rotatably on the output shaft (11).

7. Binding device according to Claim 6, **characterized in that** the bevel gear stage (20) has a bevel pinion (24) which is arranged on the drive shaft (9) or is connectable thereto, and a bevel gear (25) which is arranged on the output shaft (11), and the spur gear stage (21) has a gearwheel (26) which is arranged rotationally conjointly on the output shaft (11) on the second clutch part (31) and meshes with a mating gear (27) arranged rotationally conjointly on the knotter shaft (5).

8. Binding device according to Claim 7, **characterized in that** the gearwheel (26) is arranged eccentrically on the output shaft (11) and the mating gear (27) is arranged eccentrically on the knotter shaft (5).

9. Binding device according to one of the preceding claims, **characterized in that**, in the bale-forming phase, the connection of the knotter shaft (5) to the transmission (10) in terms of drive is interrupted by the triggering apparatus (22).

10. Binding device according to one of the preceding claims, **characterized in that**, in the binding phase, the knotter shaft (5) is connected in terms of drive to the output shaft (11) of the transmission (10) by the actuation of the triggering apparatus (22).

11. Binding device according to one of the preceding claims, **characterized in that** the telescopic actuator (15) is articulated on a first lever arm (17) which is articulated on the needle rocker (3) so as to be pivotable about the pivot axis (6), and **in that** the drive rod (16) is articulated on a second lever arm (18), which is fastened rotationally conjointly to the needle rocker (3), wherein the first lever arm (17) is connected to the second lever arm (18) by a force transmission element (19).

12. Binding device according to Claim 11, **characterized in that** the force transmission element (19) is designed, by virtue of its dimensioning, to interrupt the connection to the transmission (10) when a shear force load is exceeded during a pivoting movement of the needle rocker (3) that is directed upwards in the direction of the knotter apparatus (2).

13. Binding device according to one of the preceding claims, **characterized in that** the first lever arm (17) has a curved path portion (38) which is radially spaced apart from the pivot axis (6) and opens into an arcuate recess (39), wherein a securing element (40) arranged on the needle rocker (3) is provided to limit the pivoting movement of the first lever arm (17), which securing element engages in the arcuate recess (39) and serves as a stop for the first lever arm (17).

14. Binding device according to Claim 13, **characterized in that** the securing element (40) is designed, by virtue of its dimensioning, to interrupt the connection to the transmission (10) when a shear force load is exceeded during a downwardly directed pivoting movement of the needle rocker (3).

15. Square baler having a binding device for knotting a strip-shaped binding means which is provided for binding a compressed bale in a binding phase, wherein the binding device comprises at least one knotter apparatus (2) driven by a knotter shaft (5), a needle rocker (3) which is pivotable about a pivot axis (6) running parallel to the knotter shaft (5) and on which binding needles (4) are arranged, and a drive unit (8), wherein the drive unit (8) has a switchable transmission (10) which is driven by a drive shaft (9) and is designed and configured to drive the at least one knotter apparatus (2) and the needle rocker (3) by means of a triggering apparatus (22) when the binding phase is triggered, wherein, for pivoting the needle rocker (3), a crank arm (14) is arranged rotationally conjointly on the knotter shaft (5), on which crank arm a drive rod (16) is articulated at one end and is articulated at its other end on the needle rocker (3), **characterized in that** the binding device is designed according to one of Claims 1 to 14.

## Revendications

1. Dispositif de liage pour une presse à balles parallélépipédiques (1) pour nouer un moyen de liage en forme de bande, lequel est prévu pour lier une balle comprimée dans une phase de liage, le dispositif de liage comportant au moins un dispositif noueur (2) entraîné par un arbre de noueur (5), un balancier d'aiguille (3) pivotant autour d'un axe de pivotement (6) s'étendant parallèlement à l'arbre de noueur (5), balancier sur lequel sont disposés des aiguilles de liage (4), ainsi qu'une unité d'entraînement (8), l'unité d'entraînement (8) présentant une transmission commutable (10) entraînée par un arbre d'entraînement (9), laquelle est réalisée et conçue pour entraîner l'au moins un dispositif noueur (2) et le balancier d'aiguille (3) lors du déclenchement d'une phase de liage par un dispositif de déclenchement (22), un bras de manivelle (14) étant disposé de manière solidaire en rotation sur l'arbre de noueur (5) pour faire pivoter le balancier d'aiguille (3), bras sur lequel une tige d'entraînement (16) est articulée par une extrémité, laquelle tige est articulée par son autre extrémité sur le balancier d'aiguille (3), **caractérisé en ce que** le balancier d'aiguille (3) est accouplé à un arbre de sortie (11) de la transmission (10) par un actionneur télescopique supplémentaire (15), afin d'entraîner le balancier d'aiguille (3) pendant la phase de liage.

2. Dispositif de liage selon la revendication 1, **caractérisé en ce qu'**un bras de manivelle (13) est disposé de manière solidaire en rotation sur l'arbre de sortie (11), bras sur lequel l'actionneur télescopique (15) est articulé par une extrémité, lequel est articulé par son autre extrémité sur le balancier d'aiguille (3).

3. Dispositif de liage selon la revendication 2, **caractérisé en ce que** l'actionneur télescopique (15) présente une longueur d'extension, de sorte que le bras de manivelle (13) effectue des rotations complètes avec l'arbre de sortie (11) pendant une phase de formation de balle, le balancier d'aiguille (3) restant dans sa position de repos.

4. Dispositif de liage selon l'une des revendications 1 à 3, **caractérisé en ce que** la transmission commutable (10) présente un étage à roues coniques (20) et un étage à roues droites (21) pouvant être entraîné par l'étage à roues coniques (20) au moyen de l'arbre de sortie (11).

5. Dispositif de liage selon la revendication 4, **caractérisé en ce que** le dispositif de déclenchement (22) est réalisé sous la forme d'un accouplement à griffes (23), par lequel l'étage à roues coniques (20) peut être accouplé en entraînement à l'étage à roues droites (21).

6. Dispositif de liage selon la revendication 5, **caractérisé en ce que** l'accouplement à griffes (23) présente une première partie d'accouplement (30), laquelle est disposée de manière solidaire en rotation et axialement mobile sur l'arbre de sortie (11), et une deuxième partie d'accouplement (31), laquelle est montée sur l'arbre de sortie (11) de manière librement rotative.

7. Dispositif de liage selon la revendication 6, **caractérisé en ce que** l'étage à roues coniques (20) présente un pignon conique (24) disposé sur l'arbre d'entraînement (9) ou pouvant être relié à celui-ci et une roue conique (25) disposée sur l'arbre de sortie (11), et l'étage à roues droites (21) présente une roue dentée (26) disposée de manière solidaire en rotation sur l'arbre de sortie (11) sur la deuxième partie d'accouplement (31), laquelle roue dentée s'engrène avec une roue conjuguée (27) disposée de manière solidaire en rotation sur l'arbre de noueur (5).

8. Dispositif de liage selon la revendication 7, **caractérisé en ce que** la roue dentée (26) est disposée de manière excentrique sur l'arbre de sortie (11) et la roue conjuguée (27) est disposée de manière excentrique sur l'arbre de noueur (5).

9. Dispositif de liage selon l'une quelconque des revendications précédentes, **caractérisé en ce que**, dans la phase de formation des balles, la liaison d'entraînement de l'arbre de noueur (5) avec la transmission (10) est interrompue par le dispositif de déclenchement (22).

10. Dispositif de liage selon l'une quelconque des revendications précédentes, **caractérisé en ce que** l'arbre de noueur (5), dans la phase de liage, est relié en entraînement à l'arbre de sortie (11) de la transmission (10) par l'actionnement du dispositif de déclenchement (22).

11. Dispositif de liage selon l'une quelconque des revendications précédentes, **caractérisé en ce que** l'actionneur télescopique (15) est articulé sur un premier bras de levier (17) qui est articulé sur le balancier d'aiguille (3) de manière pivotante autour de l'axe de pivotement (6), et **en ce que** la tige d'entraînement (16) est articulée sur un deuxième bras de levier (18) qui est fixé au balancier d'aiguille (3) de manière solidaire en rotation, le premier bras de levier (17) étant relié au deuxième bras de levier (18) par un élément de transfert de force (19).

12. Dispositif de liage selon la revendication 11, **caractérisé en ce que** l'élément de transfert de force (19) est réalisé, par son dimensionnement, pour interrompre la liaison avec la transmission (10) en cas de dépassement d'une sollicitation par force de cisaillement lors d'un mouvement de pivotement, orienté vers le haut, du balancier d'aiguille (3) en direction du dispositif noueur (2).

13. Dispositif de liage selon l'une quelconque des revendications précédentes, **caractérisé en ce que** le premier bras de levier (17) présente une partie de chemin courbe (38) espacée radialement de l'axe de pivotement (6), laquelle débouche dans un évidement arqué (40), un élément de fixation (39) disposé sur le balancier d'aiguille (3) étant prévu pour la limitation du mouvement de pivotement du premier bras de levier (17), lequel élément vient en prise dans l'évidement arqué (39) et sert de butée pour le premier bras de levier (17).

14. Dispositif de liage selon la revendication 13, **caractérisé en ce que** l'élément de fixation (40) est réalisé, par son dimensionnement, pour interrompre la liaison avec la transmission (10) en cas de dépassement d'une sollicitation par force de cisaillement lors d'un mouvement de pivotement, orienté vers le bas, du balancier d'aiguille (3).

15. Presse à balles parallélépipédiques comportant un dispositif de liage pour nouer un moyen de liage en forme de bande, lequel est prévu pour lier une balle comprimée dans une phase de liage, le dispositif de liage comportant au moins un dispositif noueur (2) entraîné par un arbre de noueur (5), un balancier d'aiguille (3) pivotant autour d'un axe de pivotement (6) s'étendant parallèlement à l'arbre de noueur (5), balancier sur lequel sont disposés des aiguilles de liage (4), ainsi qu'une unité d'entraînement (8), l'unité d'entraînement (8) présentant une transmission commutable (10) entraînée par un arbre d'entraînement (9), laquelle est réalisée et conçue pour entraîner l'au moins un dispositif noueur (2) et le balancier d'aiguille (3) lors du déclenchement de la phase de liage par un dispositif de déclenchement (22), un bras de manivelle (14) étant disposé de manière solidaire en rotation sur l'arbre de noueur (5) pour faire pivoter le balancier d'aiguille (3), bras sur lequel une tige d'entraînement (16) est articulée par une extrémité, laquelle tige est articulée par son autre extrémité sur le balancier d'aiguille (3), **caractérisé en ce que** le dispositif de liage est réalisé selon l'une quelconque des revendications 1 à 14.
